# EUROPÄISCHE PATENTSCHRIFT

(11) **EP 3 132 151 B1**
(45) Veröffentlichungstag und Bekanntmachung des Hinweises auf die Patenterteilung: **11.04.2018**
(21) Anmeldenummer: 15707863.5
(22) Anmeldetag: 11.02.2015
(51) Int. Cl.: F16C 25/08, F16C 33/38, F16C 33/58

(54) **WÄLZLAGER**
ROLLING BEARING
PALIER À ROULEMENT

(30) Priorität: 15.04.2014 DE 102014207211
(43) Veröffentlichungstag der Anmeldung: 22.02.2017
(73) Patentinhaber: Schaeffler Technologies AG & Co. KG, 91074 Herzogenaurach (DE)
(72) Erfinder: LANG, Johannes, 91097 Oberreichenbach (DE); HAMPER, Stefan, 91074 Herzogenaurach (DE); ANGER, Andre, 91486 Uehlfeld (DE)
(86) Internationale Anmeldenummer: PCT/DE2015/200076
(87) Internationale Veröffentlichungsnummer: WO 2015/158337

(56) Entgegenhaltungen:
- CH-A- 264 825
- CH-A- 268 081
- GB-A- 2 147 957
- JP-A- H10 103 390
- US-A- 2 164 497
- US-A- 4 541 742

## Beschreibung

### Gebiet der Erfindung

Die Erfindung betrifft ein Wälzlager, umfassend einen Außenring, einen Innenring und zwei ringförmige, käfiggeführte Wälzkörperreihen.

### Hintergrund der Erfindung

In manchen Anwendungsfällen ist es erforderlich, ein Bauteil drehbar, gleichzeitig aber auch axial bewegbar zu lagern.
Ein Beispiel hierfür ist die Lagerung von Bedienelementen im Interieur von Kraftfahrzeugen, z.B. in Form von Betätigungsknöpfen wie Dreh-Drück-Stellern. Dort werden üblicherweise Kunststoffgleitbuchsen verwendet, um die Lagerachse des Bedienknopfes drehbar und axial bewegbar zu halten. Ein solches Kunststoffgleitlager weist über seine Lebensdauer hinweg erhöhten Ve rschleiß auf, welcher zu Schwankungen des Reibmoments und damit zu Schwankungen des Drehmoments bzw. der aufzubringenden Drückkraft des Bedienelements führt. Ein weiterer Nachteil der Kunststoffgleitbuchsen liegt darin, dass sie nur schwer radial und axial spielfrei einstellbar sind.
Die GB 2 147 957 A zeigt eine Vorrichtung mit einem Schrägkugellager mit mindestens einer Reihe von Wälzkörpern und äußeren und inneren Laufbahnen für den Schrägkontakt mit den Wälzkörpern, wobei die äußere oder die innere Laufbahn in zwei Elemente unterteilt ist und die Laufbahn eines Elementes einen Kontaktwinkel aufweist, der dem Kontaktwinkel der Laufbahn des anderen Elements entgegengesetzt ist, wobei die Elemente in Bezug zueinander axial verschiebbar sind, wobei ein elastisch verformbares Element so angeordnet ist, dass es zwischen zwei direkt oder indirekt jeweils mit einem der jeweiligen Elemente verbundenen Flächen gequetscht wird, wobei die Flächen so angeordnet sind, dass das axiale Lagerspiel abnimmt, wenn der Abstand zwischen der Oberfläche zunimmt und das Glied durch Druck gegen die Flächen elastisch verformt wird.

Die JP H10 103390 A zeigt ein Lager. Die Spurrillen und die Zylinderflächen auf beiden Seiten sind in der Außenfläche eines auf einer Welle befestigten Innenringes und auf der Innendurchmesserfläche eines zylindrischen Außenringes und der zylindrischen Flächen ausgebildet. Ein zwischen den beiden Laufringen eingebauter Halter besteht aus einem Halterkörper und einem Deckel. Eine Vielzahl von fettdichtenden Räumen ist in einem Seitenteil des Halterungskörpers ausgebildet. Eine Tasche ist in dem geschlossenen Teil jedes fettversiegelten Raums ausgebildet, um einen Rollkörper zu enthalten. Weiterhin ist ein Klemmkörper zwischen dem angrenzenden fettversiegelten Raum vorgesehen. Ein Klemmkörper, der eine Länge aufweist, die zwischen den Zylinderflächen auf beiden Seiten der Lastrillen überspannt ist, ist in dem Klemmteil enthalten. Der Klemmkörper wird durch die Kraft eines an einem Federring angeordneten Federteils in eine Richtung gedrückt, in der der Klemmkörper in Kontakt gebracht wird.

Die US 4 541 742 A zeigt eine Lageranordnung für eine Lenksäule umfassend ein axial beabstandetes Paar von Schrägkugellagern mit Laufbahnen und mindestens ein äußeres zylindrisches Stützelement, das mit der Lenksäule in Eingriff bringbar ist. Eine im Ringraum zwischen den Kugelkreisen der Lager und dem Gehäuse oder zwischen den Kugelkreisen und der Lenkwelle enthaltene Feder oder Federn dienen dazu, die Kugellager vorzuspannen.

### Zusammenfassung der Erfindung

Der Erfindung liegt somit die Aufgabe zugrunde, ein Lager anzugeben, bei welchem insbesondere die Spielfreistellung in radialer und axialer Richtung verbessert ist.

Die Aufgabe wird durch ein Wälzlager der eingangs genannten Art gelöst, welches sich erfindungsgemäß dadurch auszeichnet, dass die beiden Wälzkörperreihen über mindestens ein zwischen ihnen angeordnetes Federelement axial vorgespannt sind, wobei die beiden Wälzkörperreihen gegen jeweils einen Bord am Ende des Außenrings vorgespannt sind, während der Innenring gegen die Rückstellkraft des Federelements bewegbar ist.

Die Erfindung betrifft demnach ein Wälzlager, welches mittels eines Federelements axial spielfrei gestellt wird. Die in käfigseitigen Taschen aufgenommenen Wälzkörper wälzen auf der äußeren Mantelfläche des Innenrings sowie der inneren Mantelfläche des Außenrings sowie im Bereich der Borde des Außenrings ab. Das Federelement befindet sich zwischen den Wälzkörperreihen und erzeugt eine Kraft, welche die Wälzkörperreihen gegen die Borde am Außenring vorspannt. Durch diese Vorspannung wird sichergestellt, dass die Wälzkörper spielfrei am Außenring anliegen. Dadurch werden ein unerwünschtes Gleiten sowie ein axiales Spiel vermieden. Ein Betätigungselement, das mit seiner Lagerachse im Innenring aufgenommen ist, ist hierüber folglich spielfrei und sicher drehgelagert. Da die beiden Wälzkörperreihen zusätzlich zu den beiden Borden auch an den Mantelflächen des Außenrings und des Innenrings anliegen, wird das Wälzlager zusätzlich zur axialen Spielfreistellung auch radial spielfrei gestellt. Diese zweireihe Anordnung der Wälzkörperreihen bietet gegenüber einer einreihigen Variante eine höhere Abstützung gegen Verkippen, was für die Bedienung des Bedienelements ebenfalls vorteilhaft ist.

Ein weiterer Vorteil besteht darin, dass neben einer Spielfreiheit auch eine Reduzierung bzw. Minimierung der Reibung erreichbar ist, indem die Vorspannung, die über das Federelement erzeugt wird, entsprechend gewählt wird. Wird das Federelement z.B. aus Kunststoff gefertigt, so kann durch entsprechende Materialwahl oder durch Variation der Materialstärke oder der Geometrie des Federelements die Vorspannung entsprechend optimiert eingestellt werden.

Gegenüber einer Gleitbuchse ist somit eine radiale sowie axiale Spielfreistellung ermöglicht. Zusätzlich bietet die Erfindung die Vorteile eines Wälzlagers, die sich in Form eines geringen und über die Lebensdauer konstanten Reibmoments ohne große Schwankungen darstellen.
Das Federelement bietet durch die Beweglichkeit des Innenrings relativ zum Außenring zusätzlich zu den genannten Vorteilen die Möglichkeit, das Betätigungselement auch bei einer axialen Bewegung, die durch Drücken auf das Betätigungselement verursacht wird, zu führen. Hierzu ist eine Lagerachse oder ein Lagerzapfen des Betätigungselements fest im Innenring aufgenommen. Da der Innenring gegen die Rückstellkraft des Federelements beweglich ist, kann eine reversible Axialbewegung erfolgen, wobei der Innenring auch hierbei stets über die Wälzkörperreihen geführt ist. Damit ist eine sichere und spielfreie Führung des Betätigungselements wie z.B. des Bedienknopfes eines Dreh-Drück-Stellers in jedem Bewegungsfreiheitsgrad gegeben. Nach der Erfindung ist das Federelement einstückig mit dem Käfig einer der beiden Wälzkörperreihen ausgebildet ist. Durch diese Ausbildung kann der Herstellungsprozess vereinfacht werden, da der Käfig zusammen mit dem Federelement beispielsweise aus Kunststoff gespritzt werden kann. Dadurch kann eine einfache und kostengünstige Produktion ermöglicht werden, da das Wälzlager auch aus nur wenigen Teilen aufgebaut ist. Die Erfindung ist dahingehend ausgebildet, dass der einteilige Käfig aus zwei Ringabschnitten besteht, von welchen der erste Ringabschnitt die Wälzkörper der ersten Wälzkörperreihe aufnehmenden Taschen umfasst und der zweite Ringabschnitt der zweiten Wälzkörperreihe zugewandt ist. Zwischen den beiden Ringabschnitten befindet sich das wenigstens eine Federelement. Durch diese Weiterbildung des erfindungsgemäßen Wälzlagers wird eine gleichmäßige Kraftübertragung des Federelements auf die Wälzkörperreihen ermöglicht, da das Federelement seine Kraft über die beiden Ringabschnitte auf die Wälzkörperreihen mit ihren symmetrisch umlaufend verteilten Wälzkörpern überträgt.
Wenngleich die Möglichkeit besteht, ein einzelnes ringförmig umlaufendes Federelement z.B. in Form eines zieharmonikaartig gewinkelten Federabschnitts, der sich zwischen den Ringabschnitten erstreckt, vorzusehen, sieht eine Weiterbildung dieser einstückigen Erfindungsalternative vor, dass zwischen den Ringabschnitten mehrere Federelemente angeordnet sind, die in Form von V-förmigen Federstegen realisiert sind. Dabei sind die beiden Enden der V-förmigen Federstege mit den beiden Ringabschnitten des Käfigs verbunden. Zusätzlich kann es zweckmäßig sein, dass zwischen den einzelnen Federstegen weitere Stege ausgebildet sind, die den maximalen Federweg dahingehend begrenzen, dass sie den minimalen Abstand definieren, auf den sich die beiden Ringabschnitte durch Ausüben einer axialen Kraft auf den Innenring nähern können.
Zur einfachen Kopplung des Innenrings mit dem bzw. den Federelementen zur Ermöglichung der axialen rückstellbaren Innenringbewegung sieht die Erfindung ferner vor, dass der zweite Ringabschnitt an einem Radialbord des Innenrings anliegt, auf dessen anderer Seite die zweite Wälzkörperreihe anliegt. Hierdurch wird erreicht, dass die Kraft des Federelements gleichmäßig über den Radialbord des Innenrings auf den Innenring und damit auf die auf der anderen Seite des Radialbords anliegende Wälzkörperreihe übertragen wird. Darüber hinaus ist der Innenring so axial gelagert, dass eine Drückkraft auf den Innenring dazu führt, dass das Federelement über den Radialbord zusammen gedrückt wird. Hierüber ist auf einfache Weise eine Kopplung des Innenrings mit dem Federelement möglich. Wird eine Axialkraft auf den Innenring ausgeübt, so wird das Federelement über den Radialbord komprimiert. Bei Wegfallen der Drückkraft wird der Innenring durch die Rückstellkraft des Federelements wieder in die Ausgangsposition gebracht.
dahingehend ausgeführt werden, dass ein separates Federelement zwischen den Käfigen der beiden Wälzkörperreihen angeordnet ist. In dieser Alternative ist ein separat hergestelltes Federelement als eigenständiges Bauteil zwischen die Wälzkörperreihen eingebracht. Dadurch können abhängig vom Anwendungsfall durch den Austausch von Federelementen verschiedener Federhärte und damit verbundener Steifigkeit unterschiedliche Vorspannungskräfte, die dem jeweiligen Anwendungsfall angepasst sind, im erfindungsgemäßen Wälzlager erzeugt werden.

Diese ein separates Federelement aufweisende Alternative kann erfindungsgemäß derart weitergebildet werden, dass der Käfig der ersten Wälzkörperreihe einen Ringabschnitt aufweist, an dem das ebenfalls ringförmige Federelement abgestützt ist, das auf der gegenüberliegenden Seite am Radialbord des Innenrings anliegt, auf dessen anderer Seite die zweite Wälzkörperreihe anliegt. Neben einer einfachen Kopplung des Federelements mit den Wälzkörperreihen kann das Federelement seine Kraft auch gleichmäßig auf die Wälzkörperreihen übertragen.

Auch bei dieser Erfindungsalternative kann das als separates Bauteil ausgeführte Federelement zwei Ringabschnitte aufweisen, zwischen welchen mehrere V-förmige Federstege verlaufen, die mit ihren Enden direkt am dem Ringabschnitten angebunden sind.

Alternativ wäre die Verwendung anderer Federelemente bzw. Formen von Federstegen ebenso denkbar, wie z. B. eine metallene Schraubenfeder, ein Federelement aus Gummi, ein faltenbalgartiges Federelement oder eine ähnliche Federvorrichtung, die eine Verspannung der beiden Wälzkörperreihen gegen die Borden am Außenring des Wälzlagers ermöglicht.

Der Käfig und/oder das Federelement sind zweckmäßigerweise aus Kunststoff hergestellt. Durch die Herstellung des Käfigs aus Kunststoff wird ein Kontakt von Stahl auf Stahl zwischen dem Käfig und den Wälzkörpern vermieden. Dies bietet den Vorteil, dass das Lager geräuscharm ist. Des Weiteren besteht der Vorteil, dass speziell in der Ausführungsform, bei der der Käfig das integrierte Federelement aufweist, das gesamte Element in einem Stück mittels beispielsweise Kunststoffspritzgießen gefertigt werden kann. Dies reduziert den Aufwand und die Kosten im Herstellungsprozess. Desgleichen können die Wälzkörper aus Stahl oder aus Kunststoff bestehen, wobei insbesondere zur Ermöglichung eines geräuscharmen Laufes auf eine ungleiche Werkstoffpaarung geachtet werden sollte. Eine Herstellung des Käfigs oder des Federelements aus Metall ist folglich ebenso möglich, solange in Bezug auf das Federelement die Elastizität gewährleistet ist.

Der Außenring und Innenring sind schließlich bevorzugt durch Tiefziehen eines Stahlblechs hergestellt werden. Dies bietet den Vorteil, dass Außenring und Innenring einfach und kostengünstig hergestellt werden können. Dabei kann der Außenring und der Innenring aus hartem oder aufgrund der geringen Last auch aus weichem Stahl hergestellt werden. Ebenfalls ist die Ausführung von Außenring und Innenring aus Kunststoff denkbar.

Das erfindungsgemäße Wälzlager kann darüber hinaus insofern weitergebildet werden, dass axial zwischen den Wälzkörperreihen und den Borden des Außenrings mindestens eine Scheibe zur Abdichtung des Wälzlagers angeordnet ist. Durch die Verwendung einer solchen Scheibe kann eine Dichtwirkung erzielt werden. Dadurch kann zum einen verhindert werden, dass Schmutz und Fremdkörper durch die offenen Stellen zwischen den Borden des Außenrings und der äußeren Mantelfläche des Innenrings in das Wälzlager eindringen können und somit die Laufeigenschaften des Wälzlagers negativ beeinflusst werden. Zum anderen ist die Anbringung einer solchen Scheibe zur Abdichtung dahingehend sinnvoll, dass ein Schmiermittelverlust verhindert werden kann. Beide Mechanismen tragen dazu bei, dass die Lebensdauer des Wälzlagers erhöht wird.

### Kurze Beschreibung der Zeichnung

Ein Ausführungsbeispiel der Erfindung ist in der Zeichnung dargestellt und wird im Folgenden näher beschrieben. Es zeigen:
- Figur 1: eine Schnittansicht durch ein Ausführungsbeispiel des Wälzlagers;
- Figur 2: eine perspektivische Darstellung des Käfigs des Wälzlagers aus Figur 1;
- Figur 3: eine Schnittansicht analog Figur 1 mit ausgelenktem Innenring; und
- Figur 4: ein Ausführungsbeispiel des Käfigs des Wälzlagers mit separatem Federelement.

### Ausführliche Beschreibung der Zeichnung

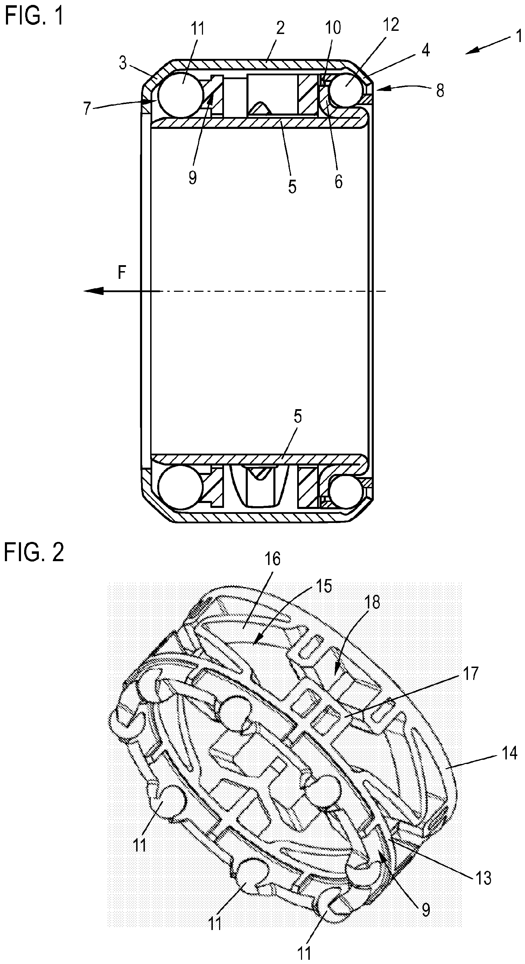

Figur 1 zeigt einen Querschnitt des erfindungsgemäßen Wälzlagers 1. Dargestellt ist ein Außenring 2, welcher an seinen Kanten radial abgeschrägte Borde 3 und 4 aufweist. Koaxial innerhalb des Außenrings 2 ist ein Innenring 5 angeordnet. Der Innenring 5 besitzt einen Radialbord 6, welcher radial in Richtung des Außenrings 2 am Innenring 5 durch entsprechende Formgebung ausgebildet ist. Der Innenring 5 und der Außenring 2 sind in diesem Ausgestaltungsbeispiel aus Stahlblech tiefgezogen.

Zwischen dem Außenring 2 und dem Innenring 5 liegen zwei käfiggeführte Wälzkörperreihen 7 und 8 umfassend mehrere Wälzkörper in Form von Kugeln. In axialer Richtung liegt die erste Wälzkörperreihe 7 am Bord 3 des Außenrings 2 an. Die zweite Wälzkörperreihe 8 liegt, axial betrachtet, zwischen dem Radialbord 6 des Innenrings 5 und dem anderen Bord 4 des Außenrings 2 an. Radial betrachtet stehen die beiden Wälzkörperreihen 7 und 8 mit der inneren Mantelfläche des Außenrings 2 und der äußeren Mantelfläche des Innenrings 5 in Kontakt und wälzen darauf ab. Die beiden Wälzkörperreihen 7 und 8 werden in Käfigen 9 und 10 geführt. Die Käfige 9 und 10 weisen Taschen auf, welche die Wälzkörper 11 und 12 der beiden Wälzkörperreihen 7 und 8 aufnehmen. Der Käfig 9 besteht aus zwei Ringabschnitten 13 und 14, wobei der erste Ringabschnitt 13 die die Wälzkörper 11 der ersten Wälzkörperreihe 7 aufnehmenden Taschen umfasst und der zweite Ringabschnitt 14 am Radialbord 6 anliegt.

In axialer Richtung sind zwischen dem Ringabschnitt 14 und dem Ringabschnitt 13 mehrere Federelemente 15 im Zwischenraum zwischen Außenring 2 und Innenring 5 angeordnet. Die Federelemente 15 sind in Figur 2 in einer perspektivischen Darstellung abgebildet. Es ist erkennbar, dass die Federelemente 15 in Umfangrichtung verlaufen, welche einer Ausrichtung in radialer Richtung zu bevorzugen ist, da die Federelemente 15 sonst beim Zusammendrücken durch eine Kraft F zusätzlichen Bauraum benötigen würden und eine radiale Spielfreistellung erschwert wäre. Die Federelemente 15 sind in Form V-förmiger Federstege 16 ausgebildet. An den Enden der Federstege 16 sind diese einstückig mit den beiden Ringabschnitten 13 und 14 und somit einstückig mit dem Käfig 9 verbunden.

Zwischen den einzelnen Federstegen 16 sind Stege 17 am Ringabschnitt 13 angeordnet und dem Ringabschnitt 14 zugewandt. Der Ringabschnitt 14 weist zu den Stegen 17 komplementäre Ausnehmungen 18 auf, die diesen zugewandt sind und in welche die Stege 17 bei einem Zusammendrücken des Federelements eingreifen. Über diese Stege 17 kann bei der Verwendung des Wälzlagers in einem als Dreh-Drück-Knopf ausgebildeten Betätigungselement der maximale axiale Bewegungsweg des Betätigungselements beim Drücken eingestellt werden.

Durch die Rückstellkraft der Federelemente 15 werden die Wälzkörperreihe 7 über den Ringabschnitt 13 und die Wälzkörperreihe 8 über den Ringabschnitt 14 und den Radialbord 6 spielfrei vorgespannt. Die beiden Wälzkörperreihen 7 und 8 liegen dabei zum einen an den Borden 3 und 4 des Außenrings 2 an. Zusätzlich sind die beiden Wälzkörperreihen 7 und 8 zwischen der äußeren Mantelfläche des Innenrings 5 und der inneren Mantelfläche des Außenrings 2 in radialer Richtung vorgespannt. Somit ist im erfindungsgemäßen Wälzlager 1 eine sowohl in radialer wie auch in axialer Richtung spielfreie Vorspannung sichergestellt.

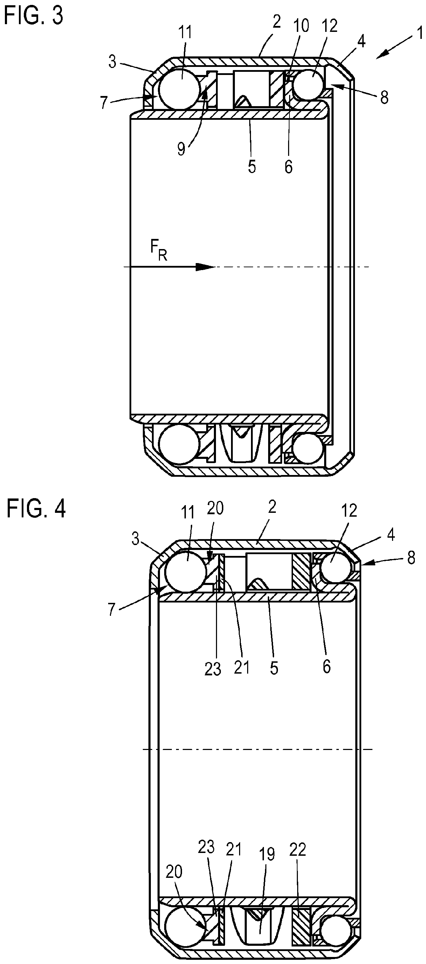

Zudem ist in Figur 1 und Figur 3 dargestellt, dass sich durch das Ausüben einer Kraft F in Pfeilrichtung auf den Innenring 5 dieser relativ zum Außenring 2 axial aus einer Ausgangsposition (Figur 1), gegen die Rückstellkraft F_{R} die durch die Federelemente 15 erzeugt wird, in eine axial verschobene Position (Figur 3) bewegt. Der Innenring 5 wird dabei in jeder Position durch die beiden Wälzkörperreihen 7 und 8 geführt. Hierbei wird die Kraft F, die beispielswiese durch ein mit einem Lagerzapfen fest im Innenring aufgenommenes Betätigungselement auf den Innenring 5 gegeben wird, über den Radialbord 6 auf den Ringabschnitt 14 und damit auf die Federelemente 15 übertragen. Der Innenring 5 oder der Lagerzapfen kann durch diese Bewegung relativ zum Rest des Wälzlagers 1, das über den Außenring 2 axial in einer Lagerhalterung festgelegt ist, auf ein sich hinter dem Wälzlager 1 befindendes Element drücken. Durch das Zusammendrücken der Federelemente 15 wird die Rückstellkraft F_{R} der Federelemente 15 aufgebaut. In Figur 3 ist der aus seiner Ausgangsposition ausgelenkte Innenring 5 und die zusammengedrückten Federelemente 15 zu erkennen.

Wird das Betätigungselement wieder entlastet, so wird der Innenring 5 von der rückstellenden Kraft F_{R} der Federelemente 15 wieder zurück in Richtung seiner Ausgangsposition bewegt, welche in Figur 1 abgebildet ist.

Im Gegensatz zur einstückigen Ausbildung gemäß den Figuren 1 bis 3 zeigt Figur 4 die Ausführungsform des Wälzlagers 1 mit separatem Federelement 19. Figur 4 unterscheidet sich - bei ansonsten gleichem Aufbau - demnach von Figur 1 dahingehend, dass das Federelement in Figur 4 nicht wie in Figur 1 einstückig mit dem Käfig verbunden ist. Vielmehr befindet sich das Federelement 19 als separates Bauteil zwischen dem Käfig 20 der ersten Wälzkörperreihe 7 und dem Radialbord 6. In dieser Ausführungsform sind die beiden Ringabschnitte 21 und 22 Bestandteil des Federelements 19. Dabei liegt der Ringabschnitt 21 am Ringabschnitt 23 des Käfigs 20 der ersten Wälzkörperreihe 7 und der Ringabschnitt 22 am Radialbord 6 an. Das Federelement 19 umfasst in diesem Ausführungsbeispiel auch V-förmige Federstege 16, die die Vorspannung zum Verspannen der Wälzkörperreihen zwischen den Radialstegen des Außenrings wie auch die Rückstellkraft beim axialen Verschieben des Innenrings erzeugen.

Es ist somit durch das erfindungsgemäße Wälzlager 1 zum einen sichergestellt, dass die beiden Wälzkörperreihen 7, 8 durch federelastische Elemente 15, 19 axial und radial spielfrei vorgespannt sind, wodurch die Kontakte zwischen den Wälzkörpern 11, 12 und dem Innenring 5 und Außenring 2 unter leichter Vorspannung stehen, aber noch keine nennenswerte Reibung erzeugen. Zum anderen wird durch die Federelemente 15, 19 eine reversible axiale Bewegung des Innenrings 5 ermöglicht.

**Bezugszahlenliste**
- 1: Wälzlager
- 2: Außenring
- 3: Bord
- 4: Bord
- 5: Innenring
- 6: Radialbord
- 7: Wälzkörperreihe
- 8: Wälzkörperreihe
- 9: Käfig
- 10: Käfig
- 11: Wälzkörper
- 12: Wälzkörper
- 13: Ringabschnitt
- 14: Ringabschnitt
- 15: Federelement
- 16: Federsteg
- 17: Steg
- 18: Ausnehmung
- 19: Federelement
- 20: Käfig
- 21: Ringabschnitt
- 22: Ringabschnitt
- 23: Ringabschnitt

## Patentansprüche

1. Wälzlager (1), umfassend einen Außenring (2), einen Innenring (5) und zwei ringförmige, käfiggeführte Wälzkörperreihen (7, 8), wobei
die beiden Wälzkörperreihen (7, 8), über mindestens ein zwischen ihnen angeordnetes Federelement (15, 19) axial vorgespannt sind, wobei die beiden Wälzkörperreihen (7, 8) gegen jeweils einen Bord (3, 4) am Ende des Außenrings (2) vorgespannt sind, während der Innenring (5) gegen die Rückstellkraft des Federelements (15, 19) axial bewegbar ist, **dadurch gekennzeichnet, dass**
das Federelement (15) einstückig mit dem Käfig (9) einer der beiden Wälzkörperreihen (7, 8) ausgebildet ist, wobei
der Käfig (9) aus einem ersten Ringabschnitt (13), welcher die Wälzkörper (11) der ersten Wälzkörperreihe (7) aufnehmenden Taschen umfasst, einem zweiten Ringabschnitt (14), der der zweiten Wälzkörperreihe (8) zugewandt ist und mindestens einem Federelement (15) zwischen den beiden Ringabschnitten (13, 14) besteht, wobei der zweite Ringabschnitt (14) an einem Radialbord (6) des Innenrings (5) anliegt, auf dessen anderer Seite die zweite Wälzkörperreihe (8) anliegt.

2. Wälzlager (1) nach Anspruch 1,
**dadurch gekennzeichnet,**
**dass** zwischen den Ringabschnitten (13, 14) mehrere Federelemente (15) vorgesehen sind, wobei die Federelemente (15) in Form V-förmiger Federstege (16) ausgebildet sind.

3. Wälzlager (1) nach dem Oberbegriff des Anspruchs 1,
**dadurch gekennzeichnet,**
**dass** das Federelement (19) als separates Bauteil zwischen den beiden Wälzkörperreihen (7, 8) angeordnet ist, wobei der Käfig (20) der ersten Wälzkörperreihe (7) einen Ringabschnitt (23) aufweist, an dem das Federelement (19) abgestützt ist und auf der gegenüberliegenden Seite am Radialbord (6) des Innenrings (5) anliegt, auf dessen anderer Seite die zweite Wälzkörperreihe (8) anliegt.

4. Wälzlager (1) nach Anspruch 3,
**dadurch gekennzeichnet,**
**dass** das Federelement (19) zwei Ringabschnitte (21, 22) aufweist, zwischen denen mehrere V-förmige Federstege (17) verlaufen.

5. Wälzlager (1) nach einem der vorangehenden Ansprüche,
**dadurch gekennzeichnet,**
**dass** der Käfig (9, 10, 20) und/oder das Federelement (15, 19) aus Kunststoff hergestellt sind.

6. Wälzlager (1) nach einem der vorangehenden Ansprüche,
**dadurch gekennzeichnet,**
**dass** axial zwischen den Wälzkörperreihen (7, 8) und den Borden (3, 4) mindestens eine Scheibe zur Abdichtung des Wälzlagers (1) angeordnet ist.

## Claims

1. Anti-friction bearing (1), comprising an outer ring (2), an inner ring (5) and two annular, cage-guided rolling body rows (7, 8), the two rolling body rows (7, 8) being prestressed axially via at least one spring element (15, 19) which is arranged between them, the two rolling body rows (7, 8) being prestressed against in each case one rim (3, 4) at the end of the outer ring (2), whereas the inner ring (5) can be moved axially counter to the restoring force of the spring element (15, 19), **characterized in that** the spring element (15) is configured in one piece with the cage (9) of one of the two rolling body rows (7, 8), the cage (9) consisting of a first ring section (13) which comprises pockets which receive the rolling bodies (11) of the first rolling body row (7), a second ring section (14) which faces the second rolling body row (8), and at least one spring element (15) between the two ring sections (13, 14), the second ring section (14) bearing against a radial rim (6) of the inner ring (5), against the other side of which the second rolling body row (8) bears.

2. Anti-friction bearing (1) according to Claim 1, **characterized in that** a plurality of spring elements (15) are provided between the ring sections (13, 14), the spring elements (15) being configured in the form of V-shaped spring webs (16).

3. Anti-friction bearing (1) according to the precharacterizing clause of Claim 1, **characterized in that** the spring element (19) is arranged as a separate component between the two rolling body rows (7, 8), the cage (20) of the first rolling body row (7) having a ring section (23), on which the spring element (19) is supported and bears on the opposite side against the radial rim (6) of the inner ring (5), against the other side of which the second rolling body row (8) bears.

4. Anti-friction bearing (1) according to Claim 3, **characterized in that** the spring element (19) has two ring sections (21, 22), between which a plurality of V-shaped spring webs (17) run.

5. Anti-friction bearing (1) according to one of the preceding claims, **characterized in that** the cage (9, 10, 20) and/or the spring element (15, 19) are/is produced from plastic.

6. Anti-friction bearing (1) according to one of the preceding claims, **characterized in that** at least one disc for sealing the anti-friction bearing (1) is arranged axially between the rolling body rows (7, 8) and the rims (3, 4).

## Revendications

1. Palier à roulement (1), comprenant une bague extérieure (2), une bague intérieure (5) et deux rangées de corps de roulement (7, 8), de forme annulaire, guidées par une cage, dans lequel les deux rangées de corps de roulement (7, 8) sont précontraintes axialement par au moins un élément de ressort (15, 19) disposé entre elles, dans lequel les deux rangées de corps de roulement (7, 8) sont précontraintes respectivement contre un rebord (3, 4) à l'extrémité de la bague extérieure (2), tandis que la bague intérieure (5) est mobile axialement contre la force de rappel de l'élément de ressort (15, 19), **caractérisé en ce que** l'élément de ressort (15) est réalisé d'une seule pièce avec la cage (9) d'une des deux rangées de corps de roulement (7, 8), dans lequel la cage (9) se compose d'une première partie annulaire (13), qui comprend des poches contenant les corps de roulement (11) de la première rangée de corps de roulement (7), d'une deuxième partie annulaire (14), qui est tournée vers la deuxième rangée de corps de roulement (8) et d'au moins un élément de ressort (15) entre les deux parties annulaires (13, 14), dans lequel la deuxième partie annulaire (14) s'applique sur un rebord radial (6) de la bague intérieure (5), sur l'autre côté duquel s'applique la deuxième rangée de corps de roulement (8).

2. Palier à roulement (1) selon la revendication 1, **caractérisé en ce qu'**il est prévu plusieurs éléments de ressort (15) entre les parties annulaires, dans lequel les éléments de ressort (15) sont réalisés sous forme de nervures élastiques en forme de V (16).

3. Palier à roulement (1) selon le préambule de la revendication 1, **caractérisé en ce que** l'élément de ressort (19) est disposé en tant que composant séparé entre les deux rangées de corps de roulement (7, 8), dans lequel la cage (20) de la première rangée de corps de roulement (7) présente une partie annulaire (23), sur laquelle l'élément de ressort (19) est appuyé et s'applique sur le côté opposé sur le rebord radial (6) de la bague intérieure (5), sur l'autre côté duquel s'applique la deuxième rangée de corps de roulement (8).

4. Palier à roulement (1) selon la revendication 3, **caractérisé en ce que** l'élément de ressort (19) présente deux parties annulaires (21, 22), entre lesquelles s'étendent plusieurs nervures élastiques (17) en forme de V.

5. Palier à roulement (1) selon l'une quelconque des revendications précédentes, **caractérisé en ce que** la cage (9, 10, 20) et/ou l'élément de ressort (15, 19) sont fabriqués en matière plastique.

6. Palier à roulement (1) selon l'une quelconque des revendications précédentes, **caractérisé en ce qu'**au moins une rondelle destinée à l'étanchéité du palier à roulement (1) est disposée entre les rangées de corps de roulement (7, 8) et les rebords (3, 4).
